Europäisches Patentamt

European Patent Office

Office européen des brevets

(11) Publication number: **0 122 787**
**A1**

## (12) EUROPEAN PATENT APPLICATION

(21) Application number: **84302526.3**

(22) Date of filing: **13.04.84**

(51) Int. Cl.³: **B 29 D 7/24**

(30) Priority: **16.04.83 GB 8310381**

(43) Date of publication of application:
**24.10.84 Bulletin 84/43**

(84) Designated Contracting States:
**BE DE FR GB IT NL**

(71) Applicant: **Proctor and Schwartz Limited**
**Industrial Estate Thornliebank**
**Glasgow G46 8JA Scotland(GB)**

(72) Inventor: **Sclater, Alex**
**19 Victoria Road**
**Barrhead G78 1NQ(GB)**

(74) Representative: **Huskisson, Frank Mackie et al,**
**FITZPATRICKS 4 West Regent Street**
**Glasgow G2 1RS Scotland(GB)**

(54) **Method and apparatus for simultaneous bi-axial stretching of film.**

(57) A process is provided for the simultaneous bi-axial stretching of film, especially plastics films such as polyesters. The process comprises moving the film in a first stenter apparatus comprising spaced endless chains then transferring the film to a second stenter apparatus which runs at a speed greater than the first stenter so that longitudinal stretching of the film is achieved. The film is moved in each stenter by chain mounted grippers holding opposed edges of the film, and the first stenter comprises a parallel input section and a following diverging or stretching section wherein the film is transversely stretched. Simultaneous longitudinal and transverse stretching of the film occurs in the stretching section, and to achieve this operation, the film edge gripper arrangement of the first stenter is arranged to provide a gripping/hold-back function in the input section while in the stretching section longitudinal slippage is permitted. Transverse stretching is facilitated by providing the film with a beaded edge which is held in the grippers. The gripper arrangement of the second stenter can be adapted to provide relaxation of the stretched film. Simultaneous biaxial film stretching is beneficial to the film, particularly as regards strength characteristics, and the process of the present invention conveniently provides such bi-axial film stretching, and further the present process permits ready adjustment of the degree of stretch (and relaxation) both in the longitudinal and transverse directions.

Croydon Printing Company Ltd.

Method and Apparatus for Simultaneous Bi-axial
Stretching of Film

The present invention relates to a method and
apparatus for simultaneous bi-axial stretching of film,
especially plastics films such as polyesters.

It is known to bi-axially stretch plastics film
such as polypropylene or polystyrene initially produced
by an extrusion process, in two successive stages
comprising firstly longitudinal stretching the film
then transverse stretching the film at an elevated
temperature. The transverse stretching operation has
been previously carried out in a textile tenter apparatus
comprising two longitudinally extending endless chains
which are trained around end wheels and which include
tenter clips which grip edges of the film moving between
opposite runs of the chains, these opposite runs of the
chains having a diverging portion serving for the
transverse stretching of the film.

It has been realised that simultaneous bi-axial
stretching of the film could give improved orientation
properties to the film in comparison with the two stage
process. Also, the carrying out of the bi-axial
stretching process in two separate stages requires
apparatus of considerable longitudinal extent.
Simultaneous bi-axial stretching of film has been
proposed previously. Thus, in a known process the
clips of the tenter apparatus are additionally carried by
a concertina or scissor lever system which is actuated
by an actuating mechanism so that in the transverse
stretching zone of the apparatus the pitch of the clips
is increased to cause simultaneous longitudinal stretching of the film: such a process is described in U.K. patent specifications 936965 and 987420. In an alternative prior art system as shown in U.K. patent specification 957519, the clips have feet which are received in a helical recess of a cylindrical actuator, the pitch of the helice increasing from end to end of the actuator, and by this means the film is simultaneously longitudinally stretched in the transverse stretching zone. U.S. patent 3445887 shows a somewhat similar arrangement. It is a disadvantage of the above lever and helical screw type bi-axial stretching systems that they are mechanically complicated, and there is increased mechanical friction for example at the pivotal points of the lever system unless low friction elements are used. Thus, if mechanical friction losses are to be maintained at an acceptable level with substantial avoidance of film soiling by lubricants, it will be desirable to utilise sealed bearings or relatively expensive lubricant free bushes and these will increase the cost of the apparatus. A further disadvantage is that the pivotal links can cause substantial increased load on the chain, and this can result in the need for larger items, e.g. chain hinge pins etc., which may create problems in the overall design of the device.

In yet a further prior art bi-axial film stretching apparatus as shown in US patent specification 3114929, the film is provided with lipped edges, and two opposed sets of edge holders serve to receive the film lips. The edge holder sets have a diverging section for transverse film stretching. However, unlike the clips of the previous arrangements the edge holders do not have translational movement, but are provided with rollers which frictionally engage the film lips, which rollers are driven by mechanical drive means for driving of the film. The driving speed of the holders increases in the downstream direction for simultaneous longitudinal stretching of the film in the transverse stretching section. Additionally, input and output drive rollers are provided for the film. A disadvantage of this sytsem is that the drive for the individual holders is complex, and there could be difficulties in synchronising the drive to the right and left hand edges of the film.

It is an object of the present invention to obviate or mitigate the aforesaid disadvantages of the prior art systems.

According to one aspect of the present invention a method of simultaneously bi-axially orientating film comprises the steps of moving film through a first conveying section with opposed edges of the film being held by a first set of edge holding means which move with the advance of the film, said first conveying section including an input portion whereat the edge holding means are located at a predetermined transverse distance apart, moving the film through a film stretching section and transferring the film to move in a second conveying section where the opposed edges of the film are held by a second set of edge holding means, the holding means of said second set being at a greater transverse distance apart than the holding means at said input portion whereby the film is transversely stretched in said stretching section, and causing the film to move at a greater linear speed in said second conveying section than in said input portion, whereby the film is additionally longitudinally stretched in said stretching section.

Preferably, the film is advanced by movement of the holding means while in the stretching section the holding means permit longitudinal slippage of the film relative thereto.

According to another aspect of the present invention a method of simultaneously bi-axially orientating film comprises the steps of holding opposed edges of the film by edge holding means, moving the film through a first conveying section including an input portion where the edge holding means are at a predetermined distance apart, moving the film through a stretching section and transferring the film to move in a second conveying section where the edge holding means of this second section are at a greater transverse distance apart than in the input portion whereby the film is transversely stretched in said stretching section and causing the film to move at a greater linear speed in said second conveying section than in said input portion while permitting longitudinal slippage of the film in the edge holding means in said stretching section whereby the film is additionally longitudinally stretched in said stretching section.

Preferably, the film is transversely stretched by a transverse opposed movement of the edge holding means, while permitting longitudinal slippage of the film in the edge holding means to enable said simultaneous longitudinal stretching of the film.

Preferably, the film is permitted to contract to a controlled degree in either of the longitudinal or transverse directions after said simultaneous stretching. The film is preferably a polyester film for example a polypropylene film.

The present invention is also film bi-axially orientated by the above method of the present invention.

According to another aspect of the present invention apparatus for simultaneously bi-axially orientating film comprises film conveying means including holding means for holding opposed edges of the film, said film conveying means including a first conveying section and a second conveying section downstream of the first section, said conveying means including a stretching section where means are provided for transverse stretching of the film, said second conveying section being arranged to operate at greater speed than the first conveying section whereby the film is additionally longitudinally stretched in said stretching section.

Preferably, said stretching section is provided in said first conveying section, transverse film stretching being achieved by transversed oppose movement of the film edge holding means, the holding means being adapted to permit longitudinal slippage of film therethrough in the stretching section.

Preferably, the holding means of the first conveying section comprises first and second sets of holding elements, the first set of elements being adapted to firmly grip the film edges while the second set of elements serve to restrain the film edges from transverse movement relative to these elements but allow longitudinal slippage of the film in the elements; and control means are provided for selective operation of said first and second sets of holding elements.

Preferably, the holding means includes a recess for receiving a beaded edge of the film.

In a preferred embodiment, the second conveying section includes a film relaxation section; and the edge holding means of the second conveying section preferably includes first and second sets of holding elements similar to those of the first conveying section; and control means are also provided for selective operation of the sets of holding elements of the second conveying section. Thus the second conveying section can permit transverse contraction of the film to a controlled degree, and by providing film take-off means operating at a speed less than the second conveying section longitudinal relaxation of the film can be achieved in said relaxation section.

Preferably each of the first and second conveying sections comprises tenter apparatus comprising pairs of longitudinally extending endless chains carrying said film holding means whereby the film is carried by opposed runs of respective chains of the chain pair. The paths of the chains can be set so as to provide said transverse stretching and relaxation sections.

An embodiment of the present invention will now be described by way of example with reference to the accompanying drawings wherein:

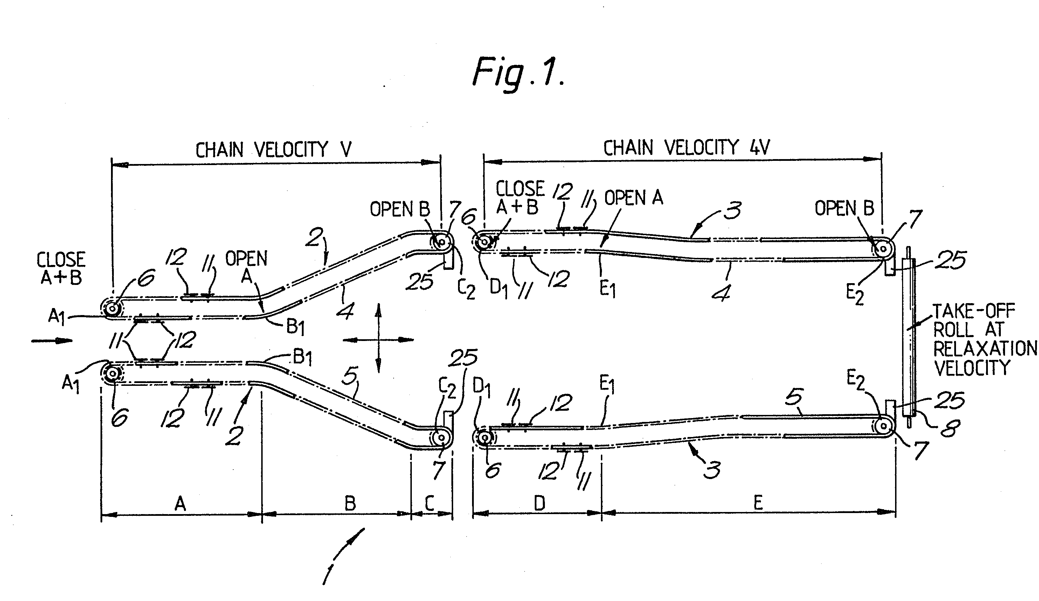

Fig. 1 shows a schematic plan view of tenter apparatus for simultaneous bi-axial stretching of film and in accordance with the present invention;

Fig. 2 shows a side view of a gripper clip of the apparatus of Fig. 1; and

Fig. 3 shows a side view of a slipping clip of the apparatus of Fig. 1.

Referring to the drawings, bi-axial film stretching apparatus 1 includes a first tenter 2 and downstream and separate therefrom a second tenter 3. Each tenter 2, 3 includes a pair of endless chains 4, 5 trained around end wheels 6, 7 and a take-off roll 8 for stretched film is located at the end of the tenter 3.

The tenter chains 4, 5 carry film edge holders to enable transporting and stretching of the film, and these holders will be described in greater detail later: the film is carried between opposed inside runs of the chains 4, 5. The tenter 2 comprises a parallel input section A where preheating of the film can occur, a film drawing section B where the chains diverge, and a substantially parallel exit section C. The tenter 3 comprises a parallel entry section D (where annealing or crystallisation of the stretched film can take place) and a film relaxation section E. The end wheels 7 of each tenter are arranged to drive at a synchronous speed.

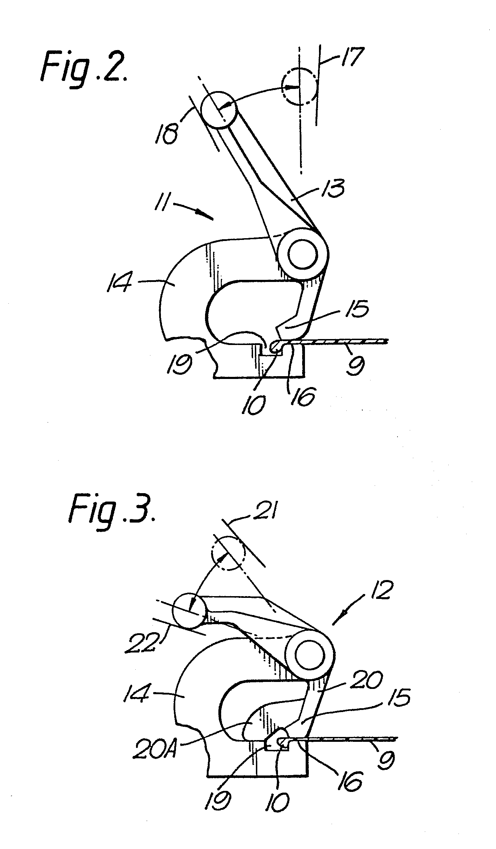

The principle of operation of the apparatus 1 is that the chains of tenter 3 run at greater speed than those of tenter 2, so that the film preheated in section A is drawn in section B to provide simultaneous bi-axial stretching therein, the stretching forces being achieved via edge holders of the tenter 3. The operation of this principle is achieved by means of a film edge holding system now described, working in conjunction with a film 9 provided with beaded edges 10 as shown in Fig. 2.

Thus in the present edge holding system there are provided 'gripping' clips 11 (Fig. 2) and 'slipping' clips 12 (Fig. 3) positioned in alternating fashion on the chains 4, 5 - clip elements may in fact form part of the chain. Referring to Fig. 2, the gripping clip 11 includes a double arm lever 13 pivotally carried by clip holder 14. The lever 13 is of spring biassed toggle form and is moved into a gripping (or closed) position where a nose 15 of the lever clamps the film edge against an opposing land 16 of the clip holder 14 by means of a cam surface 17 acting on the lever tail or away from this gripping position by means of a cam surface 18. The film engaging surface of the nose 15 is knurled or serrated to provide the required frictional grip and as can be seen the holder 14 includes a recess 19 for the film beaded edge 10. The 'slipping' clip 12 shown in Fig. 3 is generally similar to clip 11 but in this case the included angle between the arms of the clip lever 20 is smaller than that of lever 13 so that the cam surfaces 21, 22 of this clip are in planes not interfering with the cam surfaces 17, 18 of clip 11. Further, in the 'closed' position of the clip 12 the film 9 can in fact slide between the nose 15 and the land 16 of holder 14, (in a direction normal to the plane of the paper), but in this position the lever 20 holds the bead 10 in the recess 19 to restrain the film during transverse stretching. The lever 20 includes a stop portion 20A to provide a predetermined gap between the nose 15 and land 16 of clip 12 when in the closed position. The film engaging surfaces of the nose 15 and land 16 of clip 12 are preferably hardened and polished to facilitate the film slipping action. The cam surfaces 17, 18, 21, 22 are positioned to cause closing of clips 11, 12 for tenter 2 at $A$, opening of clips 11 at $B$, and opening of clips 12 at $C_2$; and in the case of tenter 3, closing of the clips 11, 12 at $D_1$, opening of clips 11 at $E_1$ and opening of the clips 12 at $E_2$.

Feeding of film to the tenter 2 can be by any suitable means, for example by the feed system described and claimed in the applicants U.K. Patent 1598020.

As a feed-in preliminary to normal continuous operation of the tenter apparatus 1, an initial portion of film 9 is run in the tenter 2 up to position $C_2$: the operation of the cam surfaces may be adjusted for this preliminary step to enable carrying of film 9 to $C_2$ by clips 11 or alternatively movement of the film through the sections B and C may be done manually. The initial portion of the film is transferred from tenter 2 to tenter 3 and this can be carried out manually (or alternatively a mechanical transfer system may be used), whereupon tenter 3 is operated to bring the film 9 to location $E_3$ whence the film is transferred to take up roll 8: the apparatus is now in readiness for normal operation.

In normal continuous operation, the clips 11, 12 are both closed at $A_1$, and through the section A the clips 11 provide film traction (holding back) at a relatively low speed (V). At $B_1$, (start of the draw section), the gripper clips 11 are opened and the 'slipping clips 12 retain the film 9 against transverse forces through the beaded edges 10 of the film but permit longitudinal sliding of the film. At the position $C_2$ the clips 12 are also opened and the film moves to the second tenter 3 wherein at $D$, both clips 11, 12 are closed. The chains 4, 5 of this tenter 3 run at a relatively higher speed (for example 4V nominally) than those of tenter 2 and the gripper clips 11 of this tenter provide film traction whereby there is provided simultaneous longitudinal stretching of the film in the section B. At the start of the relaxation section i.e. at $E_1$ the gripping clips 11 are opened and the 'slipping' clips 12 retain the film, allowing it to slip and thus relax the film which continues to the end of section E where at $E_2$ the clips 12 open to permit the film to pass to the take-off roll 8 running at the appropriate relaxation speed, i.e. at a relatively reduced speed. Means 25 will be provided to enable the beaded edges 10 to move out of the recesses 19 at the appropriate points.

The initial feed-in film portion and the beaded edge portions of the film will require scrapping but very acceptable re-processing methods are now available to reclaim this scrapped material, and this will increase the economic acceptability of the above described bi-axial stretching system according to the present invention. Temperatures can be suitably controlled during the process, both in respect of the film edges and for the film generally: this applies particularly to the draw zone and especially at the end of the draw zone.

A significant advantage of the above apparatus of the present invention over prior art systems is that it has very considerable flexibility as regards the particular transverse and longitudinal draw ratios to be used: transverse draw ratio can be relatively simply adjusted by varying the distance apart of the chains in the draw section (B) while variation of speed of the tenter section provides variation in the longitudinal draw ratio. These variations can be achieved without the need to change machine items such as cams, screws and the like. Additionally, variation in film stretching is possible during machine operation; for example during starting transverse drawing alone may be present but by increasing the speed of the second tenter section (3) longitudinal draw can gradually be introduced.

Modifications are possible on the apparatus.
For example, instead of using the combination of gripper/ slipping clips, alternative arrangements could be:

(a)    Free running rollers for control through the draw section and retention of the beaded edges;

(b)    Closed circuit free running clips operating in the draw zone to retain the beaded edges or,

(c)    A free running clip chain extending through the draw zone in which the chain is driven at some mean speed by the film, the clips retaining the beaded edges.

The apparatus can be used for bi-axial stretching various types of film, particularly polyester film, but also including polyamide, polypropylene and polystyrene.

CLAIMS

1.      A method of simultaneously bi-axially orientating film characterised by comprising the steps of moving
film (9) through a first conveying section (2) with opposed
edges of the film (9) being held by a first set of edge
holding means (11, 12) which move with the advance of
the film (9), said first conveying section (2) including
an input portion (A) whereat the edge holding means are
located at a predetermined transverse distance apart,
moving the film (9) through a film stretching section
(B) and transferring the film to move in a second conveying
section (3) where the opposed edges of the film (9) are
held by a second set of edge holding means (11, 12), the
holding means of said second set being at a greater transverse distance apart than the holding means at said input
portion (A) whereby the film is transversely stretched
in said stretching section (B), and causing the film to
move at a greater linear speed in said second conveying
section (3) than in said input portion (A), whereby the
film (9) is additionally longitudinally stretched in said
stretching section (B).

2.      The method according to claim 1, characterised
in that the film (9) is advanced by movement of the holding
means (11, 12), while in the stretching section (B) the
holding means (11, 12) permit longitudinal slippage of
the film (9) relative thereto.

3.      A method of simultaneously bi-axially orientating
film characterised by comprising the steps of holding
opposed edges of the film (9) by edge holding means (11,
12), moving the film through a first conveying section
(2) including an input portion (A) where the edge holding
means (11, 12) are at a predetermined distance apart,
moving the film through a stretching section (B) and transferring the film to move in a second conveying section
(3) where the edge holding means (11, 12) of this second section ( 3) are at a greater transverse distance apart than in the input portion (A) whereby the film (9) is transversely stretched in said stretching section (B) and causing the film (9) to move at a greater linear speed in said second conveying section (3), than in said input portion (A) while permitting longitudinal slippage of the film in the edge holding means (11, 12) in said stretching section (B) whereby the film is additionally longitudinally stretched in said stretching section (B).

4.     The method according to claim 3, characterised in that the film (9) is transversely stretched by a transverse opposed movement of the edge holding means (11, 12) while permitting longitudinal slippage of the film in the edge holding means (11, 12) to enable said additional longitudinal stretching of the film.

5.     The method according to claim 3, characterised in that the film (9) is permitted to contract to a controlled degree in either of the longitudinal or transverse directions after stretching in said stretching section (B).

6.     The method according to claim 1 or 3, characterised in that the film is a polyester film.

7.     Film which has been simultaneously bi-axially stretched by the method of any one of the preceding claims.

8.     Apparatus for simultaneously bi-axially orientating film comprising film conveying means including holding means for holding opposed edges of the film (9), characterised in that said film conveying means includes a first conveying section (2) and a second conveying section (3) downstream of the first section (2) said conveying means including a stretching section (B) where means (12) are provided for transverse stretching of the film, said second conveying section (3) being arranged to operate at greater speed than the first conveying section (2) whereby the film (9) is additionally longitudinally stretched in said stretching section (B).

9.      The apparatus according to claim 8, characterised in that said stretching section (B) is provided in said first conveying section (2), transverse film stretching being achieved by transverse opposed movement of the film edge holding means (11, 12), the holding means (11, 12) being adapted to permit longitudinal slippage of film therethrough in the stretching section (B).

10.     The apparatus according to claim 8 or 9 characterised in that the holding means (11, 12) of the first conveying section (2) comprises first and second sets of holding elements, the first set of elements (11) being adapted to firmly grip the film edges while the second set of elements (12) serve to restrain the film edges from transverse movement relative to these elements (12) but allow longitudinal slippage of the film in the elements (12); and control means (17, 18, 21, 22) are provided for selective operation of said first and second sets of holding elements (11, 12).

11.     The apparatus, according to any one of claims 8 to 10 characterised in that the holding means (11, 12) includes a recess (19) for receiving a beaded edge (10) of the film (9).

12.     The apparatus according to claim 10, characterised in that the second conveying section (3) includes a film relaxation section (E) and the edge holding means (11, 12) of the second conveying section (3) includes first and second sets of holding elements similar to those of the first conveying section; and control means are also provided for selective operation of the sets of holding elements (11, 12) of the second conveying section (3).

13.     The apparatus according to claim 12, characterised in that the holding elements (11, 12) of said first and second sets each comprises relatively movable portions (15, 16), the relatively movable portions (15, 16) of

0122787

each element of the first set (11) being capable of movement into firm abutment for secure gripping of the film (9) whereas each element of the second set (12) includes a movement limiter (20A) whereby the relatively movable portions (15, 16) of the second set elements (12) are precluded from movement into abutment to permit said longitudinal film slippage.

14. The apparatus according to any one of claims 8 to 13, characterised in that each of the first and second conveying sections (2, 3) comprises tenter apparatus comprising pairs of longitudinally extending endless chains (4, 5) carrying said film holding means (11, 12) whereby the film is carried by opposed runs of respective chains of the chain pair.

# Fig.1.

CHAIN VELOCITY V

CHAIN VELOCITY 4V

OPEN B

CLOSE
A+B

OPEN A

OPEN B

CLOSE
A+B

OPEN

25

TAKE-OFF
ROLL AT
RELAXATION
VELOCITY

0122787

**Fig.2.**

**Fig.3.**

European Patent Office

**EUROPEAN SEARCH REPORT**

**0122787**
Application number

EP 84 30 2526

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,A | US-A-3 055 048 (H.P. KOPPEHELE)<br><br>* Column 2, lines 14-35; column 3, lines 34-63; figures 1, 2 *<br><br>--- | 1,2,4,<br>7-9,14 | B 29 D 7/24 |
| A | US-A-3 124 834 (C.A. VANDIERENDONCK)<br>* Column 1, line 63 - column 2, line 3; column 2, lines 17-70; figures 2-6 *<br><br>--- | 1,7-9 | |
| A | US-A-3 132 375 (H.P. KOPPEHELE)<br>* Column 2, lines 59-71; column 3, lines 17-29; figures 1, 3 *<br><br>--- | 1,7-9 | |
| A | US-A-2 728 941 (F.P. ALLES et al.)<br>* Column 2, lines 29-35, 43-57; column 5, line 43; figures 1, 4 *<br><br>--- | | **TECHNICAL FIELDS SEARCHED (Int. Cl. ³)**<br><br>B 29 D 7/24 |
| D,A | US-A-3 114 929 (H. ZYGAN et al.) * Column 3, lines 13-15, 58-70; figures 1a, 1b, 3a *<br><br>--- | 1 | |
| D,A | GB-A- 936 965 (B.X. PLASTICS LTD.)<br><br>--- | | |
| D,A | GB-A- 957 519 (B. KAMPF et al.)<br><br>--- -/- | | |

The present search report has been drawn up for all claims

| Place of search<br>BERLIN | Date of completion of the search<br>03-08-1984 | Examiner<br>MEIER H |
|---|---|---|

European Patent Office

# EUROPEAN SEARCH REPORT

**0122787**
Application number

EP 84 30 2526

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl. ³) |
| D,A | GB-A- 987 420 (K. BRÜCKNER et al.) | | |
| D,A | US-A-3 445 887 (H.C. TSIEN) | | |
| D,A | GB-A-1 598 020 (PROCTOR & SCHWARTZ) | | |
| | | | TECHNICAL FIELDS SEARCHED (Int. Cl. ³) |

The present search report has been drawn up for all claims

| Place of search | Date of completion of the search | Examiner |
|---|---|---|
| BERLIN | 03-08-1984 | MEIER H |

EPO Form 1503. 03.82